# EUROPEAN PATENT APPLICATION

(11) **EP 2 525 427 A2**
(43) Date of publication of application: **21.11.2012**
(21) Application number: 12168349.4
(22) Date of filing: 16.05.2012
(51) Int. Cl.: H01M 4/50, H01M 4/52, H01M 4/58, H01M 4/62, H01M 4/485, H01M 4/505, H01M 4/525, H01M 4/131, H01M 4/1391, H01M 4/136, H01M 4/1397

(54) **Electric storage device and positive electrode**

(30) Priority: 18.05.2011 JP 2011111179; 20.04.2012 JP 2012096237
(71) Applicant: Fuji Jukogyo Kabusiki Kaisha, Shinjuku-ku Tokyo 160-8316 (JP); Nippon Chemical Industrial Co., Ltd., Koto-ku, Tokyo 136-8515 (JP)
(72) Inventor: Yanagita, Hideo, Tokyo (JP); Takimoto, Kazuki, Tokyo (JP); Sakuraba, Takahito, Tokyo (JP); Baba, Ken, Tokyo (JP); Kiya, Yasuyuki, Tokyo (JP); Kikuchi, Tsutomu, Tokyo 136-8515 (JP)
(74) Representative: Sajda, Wolf E.

(57) **Abstract**

An electric storage device is provided with a positive electrode having a positive-electrode mixture layer including a positive-electrode active material. The positive-electrode active material includes a lithium-vanadium-phosphate from 8 % to 70 % by mass and a lithium-nickel complex oxide from 20 % to 82 % by mass. A coating concentration of the positive-electrode mixture layer is from 4 mg/cm² to 20 mg/cm². The lithium-nickel complex oxide includes a nickel element from 0.3 mol to 0.8 mol with respect to a lithium element of 1 mol.

## Description

### BACKGROUND OF THE INVENTION

### FIELD OF THE INVENTION

The present invention relates to an electric storage device, such as a lithium-ion secondary battery, particularly, an electric storage device including Li₃V₂(PO₄)₃ as a positive-electrode active material.

### RELATED ART

Electric storage devices, such as a lithium-ion secondary battery, are recently used as a power source for electric devices and used also as a power source for electric vehicles (e.g. EV and HEV). The electric storage devices, such as a lithium-ion secondary battery, requires, for example, further improved energy density (high capacity), improved power density (high power), improved cycle characteristics (improved cycle life span), and high safety.

Recently, most of lithium-ion secondary batteries that are used for small-sized electric devices use a lithium complex oxide, such as LiCoO₂, as a positive-electrode active material, and implement high-capacity and long-life span electric storage devices. However, the positive-electrode active material overheats while producing oxygen by intensely reacting with an electrolytic solution in a high-temperature and high-potential state, and may ignite in the worst case.

Recently, olivine-type Fe (LiFePO₄) or olivine-type Mn (LiMnPO₄) having a similar crystalline structure has been examined as a positive-electrode active material having high thermal stability even in a high-temperature and high-potential state, and is practically used in some electric tools. However, since an operation voltage of LiFePO₄ which is 3.3 ~ 3.4 V with reference to Li/Li⁺ is lower than an operation voltage of the positive-electrode active materials that are used in common batteries, LiFePO₄ is not sufficient in terms of energy density or power density.
Although it is possible to expect a battery having high energy density from LiMnPO₄ because LiMnPO₄ has an operation voltage of 4.1 V with reference to Li/Li⁺ and a theoretical capacity of 160 mAh/g, the material itself has high resistance and Mn is dissolved at a high temperature.

Therefore, it has been difficult to implement a battery having high capacity, high power, long life span, and high safety, even if using olivine type.

Recently, lithium-vanadium-phosphate (Li₃V₂(PO₄)₃) has been noted as a similar positive-electrode active material having high thermal stability, for example, in US 5 871 866. Li₃V₂(PO₄)₃ has an operation voltage of Li₃V₂(PO₄)₃ of 3.8 V with reference to Li/Li⁺, and shows a capacity of 130 ~ 195 mAh/g in accordance with each plateau potential. Electron conductivity is improved and high power is implemented by a technology that forms a conductive carbon coating on the surface of a positive-electrode active material that is also used for olivine iron.

However, Li₃V₂(PO₄)₃ described in US 5 871 866 has insufficient charging/discharging cycle characteristics at a high temperature. In addition, the capacity, that is, energy density is still not enough to use an electric storage device using Li₃V₂(PO₄)₃ as a positive-electrode active material for electric vehicles.

### SUMMARY OF THE INVENTION

One or more embodiments provide a positive electrode provided with a positive-electrode active material that includes a lithium-vanadium-phosphate as a positive-electrode active material as well as an electric storage device that includes a lithium-vanadium-phosphate as a positive-electrode active material, resulting in that the electric storage device has a high charging/discharging cycle characteristic with a high capacity while having high power and high safety. Hence, the invention is directed to a positive electrode, which is particularly suitable for an electric storage device, wherein the positive electrode comprises:
a positive-electrode mixture layer including a positive-electrode active material,
wherein the positive-electrode active material includes a lithium-vanadium-phosphate and a lithium-nickel complex oxide,
wherein the mass ratio of the lithium-vanadium-phosphate to the lithium-nickel complex oxide is in a range from 8:82 to 70:20;
wherein the coating concentration of the positive-electrode mixture layer is 4 mg/cm² to 20 mg/cm², and
wherein the lithium-nickel complex oxide includes a nickel element from 0.3 mol to 0.8 mol with respect to a lithium element of 1 mol.
Furthermore, the invention is directed to an electric storage device equipped with such a positive electrode. Various embodiments of the invention are defined in the patent claims and will be explained in detail below with reference to the attached drawings.

### BRIEF DESCRIPTION OF THE DRAWINGS

- FIG. 1: is a cross-sectional view schematically showing an electric storage device (lithium-ion secondary battery) of an exemplary embodiment.
- FIG. 2: is a cross-sectional view schematically showing an electric storage device (lithium-ion secondary battery) of another exemplary embodiment.
- FIG. 3: is a graph showing relationships between a content percentage of a lithium-nickel complex oxide in a positive-electrode active material and elution amounts of vanadium from Li₃V₂(PO₄)₃.

### DETAILED DESCRIPTION OF THE EMBODIMENTS

Hereinafter, embodiments are described in detail. The embodiments relate to a positive electrode for an electric storage device as well as an electric storage device equipped with such a positive electrode. The electric storage device may be a lithium-ion secondary battery. In the electric storage device of the embodiments described below, the configurations other than a positive electrode are not specifically limited and may be implemented by appropriately combining those of a conventional art unless it impedes an effect of the present invention. Further, the embodiments and examples described herein are not intended to limit the invention but only to exemplify the invention, and all features or combinations of the features of the embodiments and the examples are not always essential to the invention.

According to an embodiment, an electric storage device has a positive electrode having a positive-electrode mixture layer containing a positive-electrode active material. The positive-electrode active material contains a NASICON type lithium-vanadium-phosphate (refer as LVP hereinafter) such as Li₃V₂(PO₄)₃ and a lithium-nickel complex oxide.

In general, when the LVP is used as a positive-electrode active material, although it is possible to manufacture an electric storage device having high power and high safety, a capacity thereof is not sufficient for an electric vehicle and a cycle life span is short.

On the other hand, in general, a lithium-nickel complex oxide is known as a positive-electrode active material of which a safety is low, but a capacity is large. However, as explained in the below, it is possible to manufacture a positive electrode having relatively large capacity, high power, and high safety by combining the lithium-nickel complex oxide having large capacity to the LVP of which the power and the safety are high, but the capacity is not sufficient such that the two active materials achieve balance.
In practice, when an electric storage device using the positive electrode having the above two active materials was manufactured and examined, a synergetic effect of the two active materials that the cycle characteristic was considerably improved, in addition to large capacity, high output, and high safety could be confirmed.

According to the examining result of a principle that a charging/discharging cycle characteristic of an electric storage device using LVP is lowered, it was found that vanadium is eluted from the positive electrode by hydrogen ion from hydrogen fluoride produced by decomposition of an electrolytic solution used in the electric storage device and the eluted vanadium influences the cycle characteristic. According to the embodiments, it is possible to prevent vanadium from being eluted from LVP because the lithium-nickel complex oxide has high proton adsorptive property and it is possible to trap the hydrogen ion that cause elution of vanadium.

### Lithium-vanadium-phosphate (LVP)

According to an embodiment, the lithium-vanadium-phosphate (LVP) represents a NASICON type lithium-vanadium-phosphate. For example, the lithium-vanadium-phosphate is a material expressed by a formula of LiₓV_{2-y}M_{y}(PO₄)_{z}. In the above, "M" is a metal element which has an atomic number of 11 or more, and one or more selected from a group of Fe, Co, Mn, Cu, Zn, Al, Sn, B, Ga, Cr, V, Ti, Mg, Ca, Sr and Zr. In the above, "x", "y" and "z" respectively satisfy 1 ≤ x ≤ 3, 0 ≤ y < 2, and 2 ≤ z ≤ 3.
According to the description in the below, the case in which the LVP is Li₃V₂(PO₄)₃ is explained. However, when the LVP can be expressed by the above formula, even if the LVP is not Li₃V₂(PO₄)₃, the elution of the vanadium by the hydrogen ion is confirmed similar to the case that the LVP is not Li₃V₂(PO₄)₃. Thus, all kinds of the LVP should have similar problems with the Li₃V₂(PO₄)₃, and the problems can be solved by the invention.

According to an embodiment, the LVP may be manufactured by any methods and the manufacturing methods are not specifically limited. For example, the LVP may be made by mixing, reacting, and burning a lithium source (such as LiOH and LiOH. H₂O), a vanadium source (such as V₂O₅ and V₂O₃), a phosphoric acid source (such as NH₄H₂PO₄ and (NH₄)₂HPO₄. Li₃V₂(PO₄)₃), and so on. The obtained LVP may be in a state of particles formed by crushing a burned product.

It is preferable that the LVP particles are spherical or substantially spherical. An average diameter of primary particles of the LVP is 2.6 µm or less, and preferably in a range of 0.05 to 1.2 µm. If the average diameter of the primary particles is less than 0.05 µm, a stability of the LVP may be lowered due to an increase of contact areas of the respective particles with an electrolytic solution. If the average diameter of the primary particles exceeds 2.6 µm, a reactivity may be lowered.
By setting the average diameter of primary particles of the LVP in the above range, a surface area of each of active material particles is increased so that the contact area with the electrolytic solution is also increased to make an electrode reaction easier.
Thereby, a rate characteristics of the lithium-ion secondary battery is improved. Further, the average diameter of the primary particles is a value obtained by observing the particles using a scanning electron microscope, measuring diameters of the primary particles of 200 particles arbitrarily selected, and calculating an average of the measured diameters.

By setting the average diameter of the primary particles of the LVP in the above range, the LVP particles are uniformly heated so that a crystallization degree of each of the particles is improved and a crystalline structure in which different phases are reduced can be obtained.

Although the crystallization degree may vary depending on manufacturing materials of the LVP and/or burning conditions, when the crystallization degree is 98 % or more, the capacity characteristics and the cycle characteristics of the lithium-ion secondary battery are improved.

Grain sizes of the LVP particles affect a density of the LVP and/or a workability of processes such as coating. Thus, it is preferable that D₅₀ in a grain size distribution of the secondary particles of the LVP is 0.5 ~ 25 µm.

When the D₅₀ is less than 0.5 µm, since the contact surface with the electrolytic solution excessively increases, the stability of LVP may be decreased. When D₅₀ exceeds 25 µm, a power may be decreased due to a decrease of a reaction efficiency.

When D₅₀ is within the above range, it is possible to obtain an electric storage device with improved stability and high power. It is more preferable that D₅₀ in the grain size distribution of the secondary particles of the LVP is within 1 ~ 10 µm, and it is particularly preferable that D₅₀ is within 3 ~ 5 µm. Further, D₅₀ in the grain size distribution of the secondary particles is a value that is measured by a grain size distribution measuring apparatus using a laser diffraction (light scattering) method.

Since the LVP has low electron conductivity, it is preferable that surfaces of the LVP particles are coated with conductive carbon so as to improve the electron conductivity of the LVP.

A coating of the conductive carbon onto the LVP may be performed by various methods. For example, a process in which the conductive carbon (e.g. carbon black such as ketjen black, acetylene black and oil furnace black, and carbon nanotube) is coated after a synthesizing of the LVP or a process in which the conductive carbon itself or a reaction precursor of the conductive carbon is mixed during synthesizing the LVP may be adopted.

The reaction precursor of the conductive carbon used for forming a positive-electrode coating layer may be, for example, a natural polymer such as sugar group such as glucose, fructose, lactose, maltose and sucrose.

By coating the LVP particles with the conductive carbon a range of a mass of which is 0.5 % to 2.4 % by mass and preferably 0.6 % to 1.8 % by mass with respect to a total mass of the LVP, a desired electric conductivity as the positive-electrode active material can be obtained. When a coating amount is lower than 0.5mass %, the electric conductivity is insufficient. When a coating amount exceeds 2.4mass %, a side reaction by the conductive carbon becomes larger to reduce a reliability.

By setting the average diameter of the primary particles of the LVP to 2.6 µm or less and further setting an amount of a use of the conductive carbon as described in the above, since the electric conductivity is applied to the LVP which is an insulating material originally, the rate characteristics relating to a charge-discharge efficiency is improved, and a reduction of a capacity retention ratio even after a repetition of uses of the lithium-ion secondary battery can be suppressed. Further, when the LVP particles are coated with the conductive carbon, an average diameter of primary particles of a LVP-conductive carbon complex may be considered as the average diameter of the primary particles of the LVP.

An industrially effective manufacturing method of the LVP-conductive carbon complex may be a manufacturing method including a process of obtaining a reaction precursor by spray-drying a reaction solution (a) prepared by reacting a lithium source, a vanadium compound, a phosphorus source, and a conductive carbon material source that generates a carbon by a thermal decomposition thereof, in a water solution, and a process of burning the reaction precursor under an inert gas atmosphere or a reductive atmosphere. By using the LVP-carbon complex as the positive-electrode active material, an electric storage device having a high discharge capacity and a superior cycle characteristics can be obtained. As methods for preparing the above reaction solution (a), for example, one of following three methods (1) to (3) may be adopted.
(1) A method in which a vanadium compound, a phosphorus source, and a conductive carbon material source that generates a carbon by a thermal decomposition thereof are subjected to a heat treatment preferably in 60 °C to 100 °C in a water solution so as to cause a reaction, then the heat treated solution is cooled down to a room temperature, and a lithium source is added to the heat treated and cooled solution so as to cause a reaction to obtain the reaction solution (a).
(2) A method in which a vanadium compound, a phosphorus source, and a conductive carbon material source that generates a carbon by a thermal decomposition thereof are subjected to a heat treatment preferably in 60 °C to 100 °C in a water solution so as to cause a reaction, and then a lithium source is added to the heat treated solution so as to cause a further reaction in a heated condition preferably in 60 °C to 100 °C to obtain the reaction solution (a).
(3) A method in which a lithium source, a vanadium compound, a phosphorus source, and a conductive carbon material source that generates a carbon by a thermal decomposition thereof are added in a water solution, and then a reaction is performed in a heated condition which is preferably in 60 to 100 °C so as to obtain the reaction solution (a).
   The reaction solution (a) obtained by the method (1) is a liquid solution. The reaction solution (a) obtained by the method (2) or (3) is a reaction solution (a) including a precipitation product. If needed, the reaction solution (a) including a precipitation product may be subjected to a wet-crushing process.
   According to an embodiment, the method of obtainin the reaction solution (a) by the method (3) is paticuraly preferable for the manufacturing method of the LVP-conductive carbon complex because a control of the diameters of the primary particles is easy.
   A specific example of the manufacturing method using the reaction solution obtained by the method (3) may include: a first step of mixing a lithium source, a pentavalent or tetravalent vanadium compound, a phosphorus source, and a conductive carbon material source that generates a carbon by a thermal decomposition thereof, in a water solution, to prepare an ingredient mixture liquid; a second step of heating the ingredient mixture liquid preferably in 60 °C to 100 °C and performing a precipitation reaction to obtain a reaction solution (a) including a precipitation product; a third step of wet-crushing the reaction solution including the precipitation product by a media mill to obtain a slurry including a crushed object; a fourth step of spray-drying the slurry including the crushed object to obtain a reaction precursor; and a fifth step of burning the reaction precursor under an inert gas atmosphere or a reductive atmosphere in a temperature from 600 °C to 1300 °C. By using the LVP-carbon complex as the positive-electrode active material, an electric storage device having a high discharge capacity and a superior cycle characteristics can be obtained.
   According to an embodiment, the lithium source may be lithium carbonate, lithium hydroxide, lithium oxide, lithium nitrate or organic lithium such as lithium oxalate, and may be aqueous or may be anhydride. Among the above listed lithium source, the lithium hydroxide has a high solubility to water and is preferable from an industrial point of view.
   According to an embodiment, the vanadium compound may be vanadium pentoxide, ammonium vanadate, vanadium oxyoxalate, and so on. Among them, the vanadium pentoxide is available in low cost and by which a reaction precursor having a superior reactivity can be obtained. Therefore, the vanadium pentoxide is preferable.
   According to an embodiment, the phosphorus source may be phosphoric acid, polyphosphoric acid, anhydrous phosphoric acid, ammonium dihydrogen phosphate, ammonium phosphate dibasic, ammonium phosphate and so on. Among them, the phosphoric acid is available in low cost and by which a reaction precursor having a superior reactivity can be obtained. Therefore, the phosphoric acid is preferable.
   According to an embodiment, the conductive carbon material source may be, for example, a coal-tar pitch from soft pitch to hard pitch; a coal-derived heavy oil such as a distillation-liquefaction oil; a petroleum-derived heavy oil including a direct type heavy oil such as an atmospheric residue and vacuum residue, and a decomposition type heavy oil such as an ethylene tar by-produced during a thermal decomposition process of a crude oil, a naphtha and so on; a aromatic hydrocarbon such as acenaphthylene, decacyclene, anthracene and phenanthrene; a polyphenylene such as phenazine, biphenyl and terphenyl; a polyvinyl chloride; a hydrosoluble polymer such as polyvinyl alcohol, polyvinyilbutyral and polyethylene glycol and insoluble-treated products thereof; a nitrogen-containing polyacrylonitrile; an organic polymer such as polypyrrole; an organic polymer such as sulfur-containing polythiophene and polystyrene; a natural polymer such as saccharide such as glucose, fructose, lactose, maltose and sucrose; a thermoplastic resin such as polyphenylene sulfide and polyphenylene oxide; and a thermosetting resin such as phenol-formaldehyde resin and imide resin.
   Among them, the saccharide (sugar group) is industrially available in low cost and preferable. In addition, an electric storage device using the LVP-carbon complex obtained from the saccharide as the positive-electrode active material has a specially superior discharging capacity and cycle characteristics, so that the saccharide is preferable.
   Further, in order to obtain the LVP-conductive carbon complex using the reaction solution (a) of the above (1), the above fourth and fifth steps may be performed after obtaining the reaction solution (a) of the above (1). In order to obtain the LVP-conductive carbon complex using the reaction solution (a) of the above (2), the above third, fourth and fifth steps may be sequentially performed after obtaining the reaction solution (a) of the above (2).

### Lithium-Nickel Complex Oxide

A ratio of Ni element in the lithium-nickel complex oxide influences a proton adsorptive property of the lithium-nickel complex oxide. Ni element is preferably contained by 0.3 to 0.8 mol with respect to lithium element of 1 mol. It is further preferable that Ni element is contained by 0.5 to 0.8 mol with respect to lithium element of 1 mol. When the ratio of Ni element is too low, it may be difficult to sufficiently prevent vanadium from being eluted from LVP.
When the ratio is within the range, as the ratio of Ni element increases, it is possible to further prevent vanadium from being eluted from LVP. Specifically, when Ni element is contained 0.5 mol or more with respect to lithium element of 1 mol, the capacity retention ratio is significantly improved by its vanadium-elution-suppressing effect.

According to an embodiment, in the lithium-nickel complex oxide, the Ni-site may be substituted by another metal element which is different from Ni and has an atomic number of 11 or more. The metal element which is different from Ni and has an atomic number of 11 or more is preferably an element selected from a transition element. Since the transition element may have a plurality of oxidation number, similar to Ni, it is possible to use ranges of the oxidation-reduction potential in the lithium-nickel complex oxide and to keep high capacity. The metal element which is different from Ni and has the atomic number of 11 or more is, for example, Co, Mn, Al, and Mg, and preferably Co and Mn.
In addition, according to an embodiment, it is preferable that the lithium-nickel complex oxide is a material which is expressed by a formula of LiNi_{1-y}M'_{y}O₂. Further, M' is one or more selected from a group of Fe, Co, Mn, Cu, Zn, Al, Sn, B, Ga, Cr, V, Ti, Mg, Ca and Sr, and "y" satisfies 0.2 ≤ y ≤ 0.7. It is further preferable that "y" satisfies 0.2 ≤ y ≤ 0.5.

The lithium-nickel complex oxide may be manufactured by any method, which is not specifically limited. For example, the lithium-nickel complex oxide may be manufactured by mixing a reaction precursor containing Ni synthesized by a solid reaction method, a coprecipitation method, a sol-gel method, or the like, with a lithium compound with a desired stoichiometric proportion, and burning thus mixed materials under an air atmosphere.

The lithium-nickel complex oxide may be generally obtained in particles by crushing a burned product. A grain diameter is not limited and a desired grain diameter may be used. Since the grain diameter influences a stability or condensation of the lithium-nickel complex oxide, it is preferable that an average grain diameter of the particles is 0.5 ~ 25 µm. When the average grain diameter is less than 0.5 µm, since the contact surface with the electrolytic solution increases, the stability of the lithium-nickel complex oxide may be decreased.
When the average grain diameter is more than 25 µm, the power may be decreased due to a reduction of concentration. When the average grain diameter is within the range of 0.5 ~ 25 µm, it is possible to obtain an electric storage device with improved stability and high power. Further, it is more preferable that the average grain diameter of the particles of the lithium-nickel complex oxide is within 1 ~ 25 µm, and it is specifically preferable that the average grain diameter of the particles of the lithium-nickel complex oxide is within 1 ~ 10 µm. The average grain diameter in the grain size distribution of the particles is a value that is measured by a grain size distribution measuring apparatus using a laser diffraction (light scattering method).

### Positive Electrode

According to an embodiment, as long as the positive-electrode active material includes the above LVP and the lithium-nickel complex oxide, the positive electrode may be manufactured from any materials known in the art. In detail, the positive electrode is made as follows.

A positive-electrode mixture layer is formed by performing a process, which includes making positive-electrode slurry by dispersing a mixture containing the positive-electrode active material, a binder, and a conductive auxiliary agent in a solvent, and applying and drying the positive-electrode slurry on a positive-electrode collector. Pressing may be performed after drying, so that the positive-electrode mixture layer is pressed uniformly and firmly on the collector. A thickness of the positive-electrode mixture layer is 10 ~ 200 µm and preferably 20 ~ 100 µm.

The binder used for forming the positive-electrode mixture layer, may be, for example, fluoride-based resin such as polyvinylidene fluoride, acryl-based binder, a rubber-based binder such as SBR, thermoplastic resin such as polypropylene and polyethylene, and carboxymethyl cellulose.
The binder is preferably fluoride-based resin and thermoplastic resin, and particularly fluoride-based resin, which shows stability in chemical and electrochemical use to the non-aqueous electrolytic solution used in the electric storage device. The fluoride-based resin may be polyvinylidene fluoride, polytetrafluoroethylene, polyvinyliene fluoride-3-fluoroethylene copolymer, ethylene-4-fluoroethylene copolymer, and propylene-4-fluoroethylene copolymer. The compounding amount of the binder is preferably 0.5 ~ 20 wt % to the positive-electrode active material.

The conductive auxiliary agent used for forming the positive-electrode mixture layer may be, for example, conductive carbon such as ketjen black, metal such as copper, iron, silver, nickel, palladium, gold, platinum, indium, tungsten or the like, and a conductive metal oxide such as indium oxide, tin oxide or the like. The compounding amount of the conductive auxiliary agent is preferably 1 ~ 30 wt % with respect to the positive-electrode active material.

The solvent used for forming the positive-electrode mixture layer may be water, isopropyl alcohol, N-methylpyrolidone, dimethylformamide or the like.

As long as the positive-electrode collector is a conductive base in which a surface thereof that comes in contact with the positive-electrode mixture layer has a conductivity, any materials may be used as the positive-electrode collector. For example, the positive-electrode collector may be a conductive base made of a conductive material, such as metal, a conductive metal oxide, and conductive carbon, a non-conductive base coated with the conductive material, or the like. It is preferable that the conductive material is copper, gold, aluminum, or an alloy of them, or conductive carbon.
The positive-electrode collector may be an expand metal, a punching metal, a foil, a net, or a foam of the materials. For a porous body, a shape or a number of through-holes are not specifically limited and may be appropriately set within a range that does not impede a movement of lithium ion.

According to an embodiment, compounding ratios of the LVP and the lithium-nickel complex oxide in the positive-electrode active material are from 8:82 (LVP : lithium-nickel complex oxide) to 70:20 (LVP : lithium-nickel complex oxide) with the mass ratio. Preferably, the ratios are in the range of 20:70 to 70:20, more preferably, 20:70 to 50:40, and more preferably 30:60 to 40:50. When the content of the lithium-nickel complex oxide is too small, it is difficult to sufficiently prevent vanadium from being eluted from the LVP, such that it is difficult to obtain desirable charging/discharging cycle characteristic and high capacity.
On the contrary, when the content of the lithium-nickel complex oxide is too large, although it is possible to prevent vanadium from being eluted from the LVP, the charging/discharging cycle characteristic of the electric storage device may not be sufficiently improved. This is because the stability of the lithium-nickel complex oxide is low, such that deterioration easily occurs. When the content in the ranges described above, it is possible to obtain high capacity and excellent cycle characteristic.

According to an embodiment, it is possible to obtain excellent cycle characteristic by making a coating concentration of the positive-electrode mixture layer 4 mg/cm² or more and 20 mg/cm² or less. The cycle is deteriorated, when the coating concentration is less than 4 mg/cm² or more than 20 mg/cm². The more the coating concentration, the higher the capacity can be achieved. It is preferable that the coating concentration of the positive-electrode mixture layer is 10 mg/cm² or more and 20 mg/cm² or less.
Further, the "coating concentration" means a coating concentration of the positive-electrode mixture layer on one side of the positive-electrode collector. When the positive-electrode mixture layers are formed on both sides of the positive-electrode mixture layer, coating concentrations of both of the positive-electrode mixture layers are respectively formed within the above ranges.

According to an embodiment, it is possible to achieve excellent cycle characteristic by making a porosity of the positive-electrode mixture layer 35 % or more and 65 % or less. The cycle is deteriorated, when the porosity of the positive-electrode mixture layer is less than 35 %.
Although excellent cycle characteristic can be kept even if the porosity of the positive-electrode mixture layer is more than 65 %, the power reduces, which is not preferable. It is more preferable that the porosity of the positive-electrode mixture layer is 40 % or more and 60 % or less.

### Negative Electrode

According to an embodiment, the negative electrode is not specifically limited, but may be made by a material known in the art. For example, a negative-electrode mixture layer is formed by applying and drying negative-electrode slurry, which is made by dispersing a mixture containing typical negative-electrode active material and binder in a solvent, on a negative-electrode collector. The binder, solvent, and collector may be the same as those of the positive electrode.

The negative-electrode active material, may be, for example, a lithium-based metal material, an intermetallic compound material of metal and lithium metal, a lithium compound, or a lithium intercalation carbon material.

The lithium-based metal material is, for example, metal lithium or a lithium alloy (for example, Li-Al alloy). The intermetallic compound material of metal and lithium metal is, for example, an intermetallic compound containing tin and silicon. The lithium compound is, for example, a lithium nitride.

The lithium intercalation carbon material may be, for example, a carbon-based material, such as graphite and a non-graphitizable carbon material, and a polyacene material. The polyacene-based material is, for example, insoluble and non-soluble PAS having a polyacene-based frame. The lithium intercalation carbon materials are all substances that can reversibly dope lithium ion. A thickness of a negative-electrode mixture layer is generally 10 ~ 200 µm and preferably 20 ~ 100 µm.

According to an embodiment, a coating concentration of the negative-electrode mixture layer is appropriately set to fit the coating concentration of the positive-electrode mixture layer. In general, the capacities (mAh) of the positive electrode and the negative electrode are set substantially the same, for the capacity balance and energy density of the positive electrode and the negative electrode in a lithium-ion secondary battery. Therefore, the coating concentration of the negative-electrode mixture layer is set on the basis of the kind of the negative-electrode active material or the capacity of the positive electrode.

### Non-aqueous Electrolytic Solution

According to an embodiment, the non-aqueous electrolytic solution is not specifically limited, but may be made by a material known in the art. For example, an electrolytic solution made by dissolving lithium salt, which is an electrolyte, in an organic solvent, because electrolysis is not generated even at a high voltage and lithium ion can stably exist.

The electrolyte may be, for example, CF₃SO₃Li, C₄F₉SO₈Li, (CF₃SO₂)₂NLi, (CF₃SO₂) ₃CLi, LiBF₄, LiPF₆, LiClO₄ or a mixture of two or more of them.

The organic solvent may be, for example, propylene carbonate, ethylene carbonate, butylene carbonate, dimethyl carbonate, diethyl carbonate, ethylmethyl carbonate, vinyl carbonate, trifluoromethylpropylene carbonate, 1, 2-dimetoxy ethane, 1, 2-dietoxy ethane, γ-butyrolactone, tetrahydrofuran, 1,3-dioxolan, 4-methyl-1,3-dioxolan, diethyl ether, sulfolane, methyl sulfolane, acetonitrile, propionitrile, or a mixed solvent of two or more of them.

The concentration of the electrolyte in the non-aqueous electrolytic solution is preferably 0.1 ~ 5.0 mol/L and more preferably 0.5 ~ 3.0 mol/L.

The non-aqueous electrolytic solution may be in a liquid state, or may be a solid electrolyte or a polymer gel electrolyte by mixing a plasticizer or a polymer.

### Separator

According to an embodiment, the separator is not specifically limited and separators known in the art can be used. For example, a porous body that has durability to an electrolytic solution, a positive-electrode active material, and a negative-electrode active material, and has non-electron conductivity with air holes communicating with each other may be preferably used.
The porous body may be, for example, fabric cloth, non-woven fabric, a synthetic resin microporous membrane, and glass fiber. The synthetic resin microporous membrane is preferably used, and particularly, a polyolefin-based microporous membrane, such as polyethylene or polypropylene is preferable for the thickness, the strength of the membrane, and the resistance of the membrane.

### Electric Storage Device

The electric storage device includes the positive electrode containing the positive-electrode active material, the negative electrode, and the non-aqueous electrolytic solution, which are described above.

Hereafter, as examples of the electric storage device, lithium-ion secondary batteries of exemplary embodiments are described with reference to the drawings.

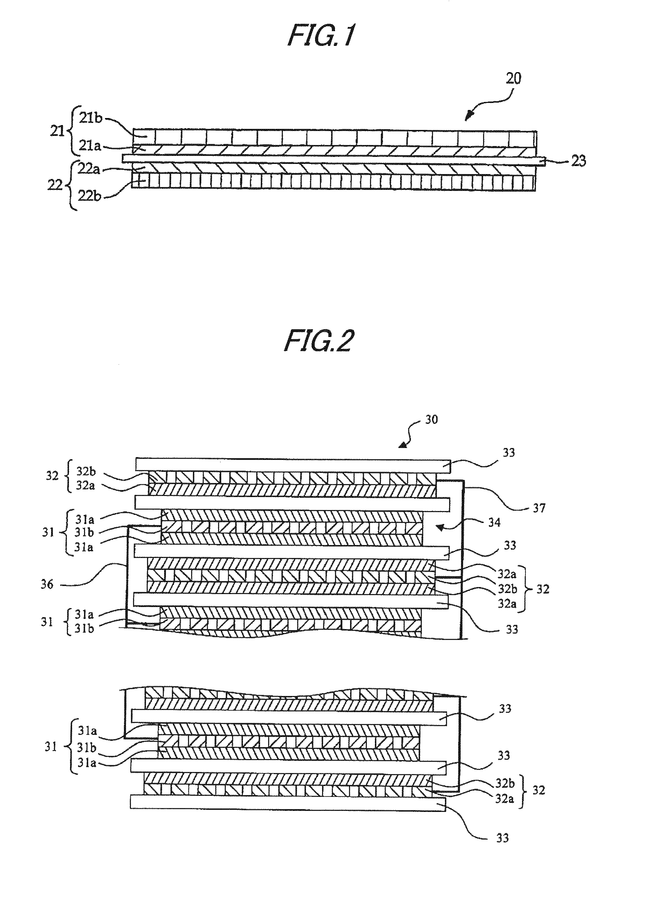

FIG. 1 is a cross-sectional view schematically showing a lithium-ion secondary battery of an exemplary embodiment. As shown in FIG. 1, a lithium-ion secondary battery 20 includes a positive electrode 21 and a negative electrode 22 that are arranged opposite to each other by a separator 23.

The positive electrode 21 is composed of a positive-electrode mixture layer 21a containing a positive-electrode active material, and a positive-electrode collector 21b. The positive-electrode mixture layer 21a is formed on a side, which faces the separator 23, of the positive-electrode collector 21b. The negative electrode 22 is composed of a negative-electrode mixture layer 22a and a negative-electrode collector 22b. The negative-electrode mixture layer 22a is formed on the side, which faces the separator 23, of the negative-electrode collector 22b.
The positive electrode 21, negative electrode 22, and separator 23 are sealed in an exterior container (not shown) and the exterior container is filled with a non-aqueous electrolytic solution. An exterior package may be, for example, a battery can or a laminate film. A lead (not shown) for connecting an exterior terminal is connected to the positive-electrode collector 21b and the negative-electrode collector 22b, respectively, if necessary.

FIG. 2 is a cross-sectional view schematically showing a lithium-ion secondary battery of another exemplary embodiment. As shown in FIG. 2, a lithium-ion secondary battery 30 includes an electrode unit 34 in which a plurality of positive electrodes 31 and negative electrodes 32 are alternatively stacked through separators 33. Each of the positive electrodes 31 is structured by disposing a positive-electrode mixture layer 31a on both sides of a positive-electrode collector 31b.
Each of the negative electrodes 32 is structured by disposing a negative-electrode mixture layer 32a on both sides of a negative-electrode collector 32b (however, in the uppermost and lowermost negative electrodes 32, the negative-electrode mixture layers 32a are formed only on one side of, respectively). Each of the positive-electrode collectors 31b has a protrusion (not shown). The protrusions of the plurality positive-electrode collectors 31b overlap with each other and leads 36 are welded to portions where the protrusions overlap.
Similarly, each of the negative-electrode collectors 32b has a protrusion. Leads 37 are welded to portions where the protrusions of the plurality of the negative-electrode collectors 32b overlap to each other. The lithium-ion secondary battery 30 is structured by sealing the electrode unit 34 and the non-aqueous electrolytic solution in an exterior container, such as a laminate film (not shown). The leads 36, 37 are exposed outside the exterior container to connect an external equipment.

The lithium-ion secondary battery 30 may include a lithium electrode in the exterior container in order to pre-dope lithium ion on the positive electrode, the negative electrode, or both the positive electrode and negative electrode. In the configuration in which the lithium electrode is provided, through-holes in the stacking direction of the electrode unit 34 are formed in the positive-electrode collector 31b, the negative-electrode collector 32b and the like to allow the lithium ion to easily move.

Although negative electrodes are disposed at the uppermost and the lowermost sides in the lithium-ion secondary battery 30 of FIG. 2, but the configuration is not limited thereto, and positive electrodes may be disposed at the uppermost and the lowermost sides.

### EXAMPLES

Hereinafter, the invention is described with reference to examples. In the examples, it should be noted that LVP indicates Li₃V₂(PO₄)₃ when the LVP is presented in "LVP-Carbon complex" and on the other hand LVP is not limited to Li₃V₂(PO₄)₃ when LVP is presented solely in "LVP".

### Example 1

### (1-1) Manufacturing of LVP-Carbon complex

### First Step:

A 2L of an ion-exchange water was poured in a beaker of 5L-size, and 605 g of a phosphoric acid of 85 % concentration, 220 g of a lithium hydroxide, 320 g of a vanadium pentoxide, and 170 g of a sucrose were put thereinto, and they were agitated at a room temperature (25 °C), thereby obtaining an ocher ingredient mixture liquid.

### Second Step:

The obtained ingredient mixture liquid was heated while agitating at 95 °C for 1 hour for a precipitation reaction, thereby obtaining a green reaction liquid including a precipitation product. The obtained precipitation product was measured, by a laser scattering/diffraction method (NIKKISO, type 9320-X100), that an average particle diameter of particles thereof is 30 µm.

### Third Step:

The reaction liquid was cooled. Then, zirconia balls diameters of which are 0.5 mm were put in a wet-milling machine, and continued a milling operation by beads-milling till an average particle size (D₅₀) of the particles of the product to be milled in the reaction liquid became 2.0 µm or lower, and thereby obtaining a dispersion slurry.

### Fourth Step:

Then, the dispersion slurry was fed into a spray-drying machine, a hot-air entrance temperature of which was set to 230 °C and an exit temperature of which was set to 120 °C, and thereby a reaction precursor was obtained. An average grain size of secondary particles of the reaction precursor measured by a SEM observation method was 25 µm. According to a powder X-ray diffraction measurement using Cu Kα-ray of the reaction precursor, a diffraction peak (2θ = 14°) derived from the lithium phosphate, a diffraction peak (2θ = 29°) derived from the vanadium hydrogenphosphate, and a diffraction peak of an unidentified crystalline compound were confirmed. Thus, the obtained reaction precursor is confirmed as a mixture in which the lithium phosphate, the vanadium hydrogenphosphate and the unidentified crystalline compound are mixed.
Further, a measurement of the average grain size of the secondary particles of the reaction precursor was performed by the steps as follows: First, a SEM image of the secondary particles was subjected to an image analyzing, a 2D projection of the secondary particles was performed, and 200 of the secondary particles were arbitrarily selected. Then, the grain sizes of the 200 secondary particles were measured. Finally, the measured 200 grain sizes were averaged, and thereby the average grain size of the secondary particles of the reaction precursor was obtained.

### Fifth Step:

The obtained reaction precursor was put in a mullite sagger, and burned at 900 °C under a nitrogen gas atmosphere for 12 hours.

### Crushing Step:

The obtained burned product was crushed by a jet-milling machine and thereby a LVP-Carbon complex sample was obtained. An average diameter of primary particles of the obtained LVP-Carbon complex was 0.35 µm.
According to measurements of a mass of LVP and a carbon-coating amount of the LVP-Carbon complex by a TOC Total-Organic-Carbon analyzing machine (TOC-5000A SHIMADZU Corporation), a mass of carbon based on a total mass of the LVP was 1.7 %(average).

### (1-2) Manufacturing of Positive Electrode

The following materials for a positive-electrode mixture layer:
Active material (LVP-Carbon complex): 30 parts by mass;
Active material (LiNi_{0.8}Co_{0.1}Mn_{0.1}O₂): 60 parts by mass;
Binder (polyvinylidene fluoride (PVdF); 5 parts by mass;
Conductive material (carbon black); 5 parts by mass; and
Solvent (N-methyl2-pyrolidone (NMP)); 100 parts by mass;
were mixed, thereby obtaining positive-electrode slurry. A positive-electrode mixture layer was formed on a positive-electrode collector by applying and drying the positive-electrode slurry on the positive-electrode collector, which is an aluminum film (thickness of 30 µm). The coating concentration (per one side) of the positive-electrode mixture layer was 15 mg/cm². A coated portion (the portion where the positive-electrode mixture layer was formed) was cut in 50 mm x 50 mm, while an uncoated portion of 10 mm × 10 mm was left for a tab for connecting a lead. A porosity of the positive-electrode mixture layer was 40 %, measured by a mercury porosimeter.

### (2) Manufacturing of Negative Electrode

The following materials for a negative-electrode mixture layer:
Active material (graphite): 95 parts by mass;
Binder (PVdF): 5 parts by mass; and
Solvent (NMP): 150 parts by mass;
were mixed, thereby obtaining negative-electrode slurry. A negative-electrode mixture layer was formed on a negative-electrode collector by applying the negative-electrode slurry on the negative-electrode collector, which is a copper film (thickness of 10 µm). The coating concentration (per one side) of the negative-electrode mixture layer was 7 mg/cm². A coated portion (the portion where the negative-electrode mixture layer was formed) was cut in 52 mm × 52 mm, while an uncoated portion of 10 mm × 10 mm was left for a tab for connecting a lead.

### (3) Manufacturing of Battery

A lithium-ion secondary battery described in the exemplary embodiment shown in FIG. 2 was manufactured by using nine sheets of positive electrodes and ten sheets of negative electrodes, which were manufactured as described above. In detail, the positive electrodes and the negative electrodes were stacked through separators and the stacked body was fixed by a tape. The tabs of the positive-electrode collectors were overlapped and metal leads were welded. Similarly, the tabs of the negative-electrode collectors were overlapped and nickel leads were welded.
The stacked body was set in a laminate exterior package with the positive-electrode leads and the negative-electrode leads taken out from the exterior package, and then the exterior package was sealed by fusion except for an electrolytic solution injection opening. An electrolytic solution was injected through the injection opening, the electrolytic solution was impregnated into the electrodes by vacuum impregnation, and the laminate was vacuum-sealed.

### (4) Test of Charging/Discharging

The positive-electrode leads and negative-electrode leads of the battery manufactured as described above were connected to corresponding terminals of a charging/discharging tester (by ASKA electronic co., Ltd), constant current/constant voltage was supplied at the maximum voltage of 4.2 V and current rate of 0.2 C, and discharge of constant current was performed to 2.5 V at a current rate of 0.2 C, after charging was completed.
This process was repeated 1000 times. Energy density (Wh/kg) was calculated from the capacity measured in the first discharge and a cycle capacity retention ratio (discharge capacity at 1000-th cycle/discharge capacity at first time×100) was calculated from the capacity after the cycles. The energy density was 192 Wh/kg and the capacity retention ratio was 92 %. The power density was 2500 W/kg.
The power density was calculated by discharging pulses of a current rate of 1 C ~ 10 C for 10 seconds under a charging depth of 50 %, and electric power reaching to a cutoff voltage of 2.5 V was calculated from the relationship between the voltage and current values after the pulses and then divided by a cell weight.

### Example 2

A battery was manufactured and tested under the same conditions as those of Example 1, except for changing the positive-electrode active material from LiNi_{0.8}Co_{0.1}Mn_{0.1}O₂ to LiNi_{0.8}Co_{0.1}Al_{0.1}O₂. The energy density was 192 Wh/kg and the capacity retention ratio was 92 %. The power density was 2500 W/kg.

### Example 3

A battery was manufactured and tested under the same conditions as those of Example 1, except that LVP-Carbon complex was 40 parts by mass and LiNi_{0.8}Co_{0.1}Mn_{0.1}O₂ was 50 parts by mass, which are positive-electrode materials. The energy density was 189 Wh/kg and the capacity retention ratio was 92 %. The power density was 2700 W/kg.

### Example 4

A battery was manufactured and tested under the same conditions as those of Example 1, except that LVP-Carbon complex was 20 parts by mass and LiNi_{0.8}Co_{0.1}Mn_{0.1}O₂ was 70 parts by mass, which are positive-electrode materials, and the coating concentration of the positive-electrode mixture layer was 14.5 mg/cm². The energy density was 199 Wh/kg and the capacity retention ratio was 92 %. The power density was 2000 W/kg.

### Example 5

A battery was manufactured and tested under the same conditions as those of Example 1, except that LVP-Carbon complex was 8 parts by mass and LiNi_{0.8}Co_{0.1}Mn_{0.1}O₂ was 82 parts by mass, which are positive-electrode materials, and the coating concentration of the positive-electrode mixture layer was 10 mg/cm^{2.} The energy density was 182 Wh/kg and the capacity retention ratio was 87 %. The power density was 2000 W/kg.

### Example 6

A battery was manufactured and tested under the same conditions as those of Example 1, except that LVP-Carbon complex was 70 parts by mass and LiNi_{0.8}Co_{0.1}Mn_{0.1}O₂ was 20 parts by mass, which are positive-electrode materials, and the coating concentration of the positive-electrode mixture layer was 17 mg/cm^{2.} The energy density was 172 Wh/kg and the capacity retention ratio was 92 %. The power density was 2800 W/kg.

### Comparative Example 1

A battery was manufactured and tested under the same conditions as those of Example 1, except that only LiNi_{0.8}Co_{0.1}Mn_{0.1}O₂ of 90 parts by mass was used as a positive-electrode active material, the coating concentration of the positive-electrode mixture layer was 8.6 mg/cm², and coating concentration of the negative-electrode mixture layer was 4.5 mg/cm². The energy density was 177 Wh/kg and the capacity retention ratio was 70 %. The power density was 1700 W/kg.

### Comparative Example 2

A battery was manufactured and tested under the same conditions as those of Comparative Example 1, except that only LiNi_{0.8}Co_{0.1}Al_{0.1}O₂ of 90 parts by mass was used as a positive-electrode active material. The energy density, capacity retention ratio, and power density were shown by the same values as those in Comparative Example 1.

### Comparative Example 3

A battery was manufactured and tested under the same conditions as those of Example 1, except that only LVP-Carbon complex of 90 parts by mass was used as a positive-electrode material. The energy density was 150 Wh/kg and the capacity retention ratio was 50 %. The power density was 3200 W/kg. The results of Examples 1 to 6 and Comparative Example 1 to 3 were shown in Table 1 and Table 2.

**Table 1**

| | | Example 1 | Example 2 | Example 3 | Example 4 | Example 5 | Example 6 |
|---|---|---|---|---|---|---|---|
| Positive electrode active material | LVP-Carbon complex | 30 parts by mass | 30 parts by mass | 40 parts by mass | 20 parts by mass | 8 parts by mass | 70 parts by mass |
| | LiNi_{0.8}Co_{0.1}Mn_{0.1}O₂ | 60 parts by mass | - | 50 parts by mass | 70 parts by mass | 82 parts by mass | 20 parts by mass |
| | LiNi_{0.8}Co_{0.1}Al_{0.1}O₂ | - | 60 parts by mass | - | - | - | - |
| Coating concentration of positive electrode (mg/cm²) | | 15 | 15 | 15 | 14.5 | 10 | 17 |
| Porosity of positive electrode (%) | | 40 | 40 | 40 | 40 | 40 | 40 |
| Energy density (Wh/kg) | | 192 | 192 | 189 | 199 | 182 | 172 |
| Power density (W/kg) | | 2500 | 2500 | 2700 | 2000 | 2000 | 2800 |
| Capacity retention ratio (after 1000 cyc) | | 92 % | 92 % | 92 % | 92 % | 87 % | 92 % |

**Table 2**

| | | Comparative Example 1 | Comparative Example 2 | Comparative Example 3 |
|---|---|---|---|---|
| Positive Electrode Active material | LVP-Carbon complex | - | - | 90 parts by mass |
| | LiNi_{0.8}Co_{0.1}Mn_{0.1}O₂ | 90 parts by mass | - | - |
| | LiNi_{0.8}Co_{0.1}Al_{0.1}O₂ | - | 90 parts by mass | - |
| Coating concentration of positive electrode (mg/cm²) | 8.6 | 8.6 | 15 | |
| Porosity of positive electrode (%) | 40 | 40 | 40 | |
| Energy density (Wh/kg) | 177 | 177 | 150 | |
| Power density (W/kg) | 1700 | 1700 | 3200 | |
| Capacity retention ratio (after 1000 cyc) | 70% | 70% | 50% | |

As can be seen from the test results of Examples 1 to 6, the capacity was increased by the increase in compounding amount of LiNi_{0.8}Co_{0.1}Mn_{0.1}O₂ and the power was decreased by the decrease in compounding amount of LVP-Carbon complex. For the cycle characteristic, very excellent characteristic was shown when the compounding amount was in the ranges of Examples 1 to 6.
Therefore, it may be considered that vanadium was prevented from being eluted from Li₃V₂(PO₄)₃ because hydrogen ion was trapped by LiNi_{0.8}Co_{0.1}Mn_{0.1}O₂(or LiNi_{0.8}Co_{0.1}Al_{0.1}O₂). Further, in Examples 1 to 5, the energy density was increased more than single LVP-Carbon complex (Comparative Example 3), single LiNi_{0.8}Co_{0.1}Mn_{0.1}O₂ or LiNi_{0.8}Co_{0.1}Al_{0.1}O₂ (Comparative Examples 1 and 2).

### Example 7

A battery was manufactured and tested under the same conditions as those of Example 1, except that the coating concentration of the positive-electrode mixture layer was 20 mg/cm² and the coating concentration of the negative-electrode mixture layer was 9 mg/cm². The energy density was 210 Wh/kg and the capacity retention ratio was 92 %.
The power density was 1900 W/kg.

### Example 8

A battery was manufactured and tested under the same conditions as those of Example 1, except that the coating concentration of the positive-electrode mixture layer was 4 mg/cm² and the coating concentration of the negative-electrode mixture layer was 2 mg/cm². The energy density was 115 Wh/kg and the capacity retention ratio was 92 %.
The power density was 4500 W/kg.

### Comparative Example 4

A battery was manufactured and tested under the same conditions as those of Example 1, except that the coating concentration of the positive-electrode mixture layer was 2.2 mg/cm² and the coating concentration of the negative-electrode mixture layer was 1 mg/cm². The energy density was 71 Wh/kg and the capacity retention ratio was 80 %. The power density was 4800 W/kg.

### Comparative Example 5

A battery was manufactured and tested under the same conditions as those of Example 1, except that the coating concentration of the positive-electrode mixture layer was 26 mg/cm² and the coating concentration of the negative-electrode mixture layer was 12 mg/cm². The energy density was 220 Wh/kg and the capacity retention ratio was 50 %.
The power density was 1300W/kg.

### Comparative Example 6

A battery was manufactured and tested under the same conditions as those of Example 1, except that only LiNi_{0.8}Co_{0.1}Mn_{0.1}O₂ of 90 parts by mass was used as a positive-electrode active material, the coating concentration of the positive-electrode mixture layer was 3.8 mg/cm², and coating concentration of the negative-electrode mixture layer was 2 mg/cm². The energy density was 117 Wh/kg and the capacity retention ratio was 70 %.
The power density was 3500 W/kg.

The results of Examples 7 and 8 and Comparative Example 4 to 6 were shown in Table 3.

**Table 3**

| | | Example 7 | Example 8 | Comparative Example 4 | Comparative Example 5 | Comparative Example 6 |
|---|---|---|---|---|---|---|
| Positive electrode active material | LVP-Carbon complex | 30 parts by mass | 30 parts by mass | 30 parts by mass | 30 parts by mass | - |
| | LiNi_{0.8}Co_{0.1}Mn_{0.1}O₂ | 60 parts by mass | 60 parts by mass | 60 parts by mass | 60 parts by mass | 90 parts by mass |
| coating concentration of positive electrode (mg/cm²) | | 20 | 4 | 2.2 | 26 | 3.8 |
| Porosity of positive electrode (%) | | 40 | 40 | 40 | 40 | 40 |
| Energy density (Wh/kg) | | 210 | 115 | 71 | 220 | 117 |
| Power density (W/kg) | | 1900 | 4500 | 4800 | 1300 | 3500 |
| Capacity retention ratio (after 1000 cyc) | | 92% | 92% | 80 % | 50% | 70% |

As can be seen from the test results of Examples 7 and 8 and Comparative Examples 4 and 5, it is possible to increase the capacity, although the power is reduced by increasing the coating concentration of the positive-electrode mixture layer. However, the capacity retention ratio was reduced, when the coating concentration of the positive-electrode mixture layer was too large. This is because impediment of carrying of the electrolytic solution between the positive electrode and the negative electrode, reduction of dispersion of lithium in the electrodes, and weakness of the electrodes, due to charging/discharging.

It can be seen that it is possible to increase power by decreasing the coating concentration of LiNi_{0.8}Co_{0.1}Mn_{0.1}O₂ that is a high-capacity material (Comparative Example 6) but both the power and cycle characteristic are deteriorated in comparison to an active material (for example, Example 8) having the same capacity of the present invention.

Therefore, it can be seen that it is necessary to use an active material in which LVP and a lithium-nickel complex oxide are mixed, as in the present invention, in order to satisfy the capacity, power, cycle characteristic and the characteristic of safety.

Since the battery of Example 8 has small capacity, but has an excellent cycle characteristic and very high power density, it is possible to achieve a very useful battery for the use that requires high power, such as HEV.

### Example 9

A battery was manufactured and tested under the same conditions as those of Example 1, except for changing the positive-electrode active material from LiNi_{0.8}Co_{0.1}Mn_{0.1}O₂ to LiNi_{0.33}Co_{0.33}Mn_{0.33}O₂. The energy density was 180 Wh/kg and the capacity retention ratio was 80 %. The power density was 2600 W/kg.

### Comparative Example 7

A battery was manufactured and tested under the same conditions as those of Example 1, except for changing the positive-electrode active material from LiNi_{0.8}Co_{0.1}Mn_{0.1}O₂ to LiNi_{0.2}Co_{0.4}Mn_{0.4}O₂ and making the coating concentration of the positive electrode 17 mg/cm². The energy density was 162 Wh/kg and the capacity retention ratio was 70 %. The power density was 2500 W/kg. The results of Example 9 and Comparative Example 7 were shown in Table 4.

**Table 4**

| | | Example 9 | Comparative Example 7 |
|---|---|---|---|
| Positive electrode active material | LVP-Carbon complex | 30 parts by mass | 30 parts by mass |
| | LiNi_{0 33}Co_{0 33}Mn_{0 33}O₂ | 60 parts by mass | - |
| | LiNi_{0 2}Co_{0 4}Mn_{0 4}O₂ | - | 60 parts by mass |
| coating concentration of positive electrode (mg/cm²) | 15 | 17 | |
| Porosity of positive electrode (%) | 40 | 40 | |
| Energy density (Wh/kg) | 180 | 162 | |
| Power density (W/kg) | 2600 | 2500 | |
| Capacity retention ratio (after 1000 cyc) | 80 % | 70 % | |

### Example 10

A battery was manufactured and tested under the same conditions as those of Example 1, except for changing the positive-electrode active material from LiNi_{0.8}Co_{0.1}Mn_{0.1}O₂ to LiNi_{0.6}Co_{0.2}Mn_{0.2}O₂, and making the coating concentration of the positive electrode 17 mg/cm². The energy density was 191 Wh/kg and the capacity retention ratio was 88 %. The power density was 2630 W/kg.

### Example 11

A battery was manufactured and tested under the same conditions as those of Example 1, except for changing the positive-electrode active material from LiNi_{0.8}Co_{0.1}Mn_{0.1}O₂ to LiNi_{0.5}Co_{0.3}Mn_{0.2}O₂ and making the coating concentration of the positive electrode 17 mg/cm². The energy density was 186Wh/kg and the capacity retention ratio was 86 %. The power density was 2620W/kg. The results of Examples 10 and 11 were shown in Table 5.

**Table 5**

| | | Example 10 | Example 11 |
|---|---|---|---|
| Positive electrode active material | LVP-Carbon complex | 30 parts by mass | 30 parts by mass |
| | LiNi_{0.6}Co_{0.2}Mn_{0.2}O₂ | 60 parts by mass | - |
| | LiNi_{0.5}Co_{0.3}Mn_{0.2}O₂ | - | 60 parts by mass |
| coating concentration of positive electrode (mg/cm²) | 17 | 17 | |
| Porosity of positive electrode (%) | 40 | 40 | |
| Energy density (Wh/kg) | 191 | 186 | |
| Power density (W/kg) | 2630 | 2620 | |
| Capacity retention ratio (after 1000cyc) | 88 % | 86 % | |

It can be seen that as the containing ratio of the Ni element decreases in the lithium-nickel complex oxide in the positive-electrode active material decreases, the capacity and the cycle characteristic are reduced, according to a comparison of Examples 1 and 9-11, and Comparative Example 7. In other words, as a composition ratio of the Ni element increases under an existence of the lithium-nickel complex oxide, the capacity and the cycle characteristic are improved.
When the composition rate of the Ni element with respect to the Li element is 0.3 or more, the capacity retention ratio is 80 % or more. When the composition rate of the Ni element with respect to the Li element is 0.5 or more, the capacity retention ratio is 85 % or more. Basically, the capacity would increase as the ratio of the Ni element increases in the lithium-nickel complex oxide that is the positive-electrode active material, but the cycle characteristic is reduced by reduction in stability as the active material.
Nevertheless, it can be seen that the cycle characteristic is improved as the composition ratio of the Ni element is increased. The reason is considered that the vanadium in Li₃V₂(PO₄)₃ is prevented from being eluted by an existence the lithium-nickel complex oxide (particularly, the Ni element).

### Estimation of Effect of preventing vanadium from being eluted from Li₃V₂(PO)₄)₃

The effect of preventing vanadium from being eluted by a lithium-nickel complex oxide was estimated by measuring the elution amount of vanadium.

Li₃V₂(PO₄)₃ and LiNiₓCo_{(1-x)/2}Mn_{(1-x)/2}O₂(X = 0.8, 0.6, 0.33, 0.2) were prepared as positive-electrode active materials. A positive-electrode active material containing only Li₃V₂(PO₄)₃ and positive-electrode active materials mixed with LiNiₓCo_{(1-x)/2}Mn_{(1-x)/2}O₂ of 5 mass %, 10 mass %, 20 mass %, 30 mass %, 50 mass %, 70 mass %, and 90 mass % to Li₃V₂(PO₄)₃ were made. Batteries were manufactured by the method the same as Example 1 by using the positive-electrode active materials.

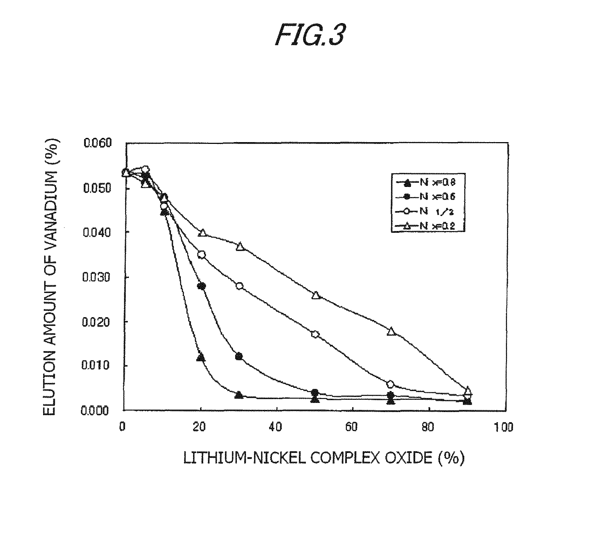

A durability cycle to charging/discharging was tested by using the batteries and positive electrodes and negative electrodes were extracted by disassembling the batteries after 100 cycles. The eluted vanadium is extracted at the negative electrodes. Thereafter, the elution amount of vanadium from Li₃V₂(PO₄)₃ of batteries having various positive electrodes was measured by determining the quantity of vanadium on the surfaces of the negative electrodes, using fluorescent X-ray analysis. The result was shown in FIG. 3.

As shown in FIG. 3, the larger the content of the lithium-nickel complex oxide in the positive-electrode active material, the less the elution amount of vanadium was eluted. The larger the composition ratio of Ni element in the positive-electrode active material, the less the elution amount of vanadium was eluted.

As can be seen from the embodiments and examples, it is possible to obtain high capacity, high power, and good cycle characteristic, by mixing LVP-Carbon complex and a lithium-nickel complex oxide within the range (LVP-Carbon complex : lithium-nickel complex oxide) of 8:82 parts by mass to 70:20 parts by mass. In the test result, it was seen that elution of vanadium was significantly reduced in the range.

As can be seen from the embodiments and examples, it was possible to achieve high capacity, high power, and good cycle characteristic, when the ratio of Ni element is 0.3 mol to 0.8 mol (particularly, when the ratio of Ni element is
0.5 mol to 0.8 mol) with respect to a lithium element of 1 mol in a lithium-nickel complex oxide. Similarly, in the test result, elution of vanadium was significantly reduced in the range. In particular, it can be seen that the effect of reducing the elution of vanadium is significantly large when the ratios of Ni element are 0.6 and 0.8 compared to the cases when the ratios are 0.2 and 0.33.

### Required Characteristics of Battery

According to the development roadmap for a secondary battery by NEDO (New Energy and Industrial Technology Development Organization), a secondary battery requires a specific energy (energy per unit mass) of 250 Wh/kg, power density of 1500 W/kg, and cycle life span of 1000 and 85 %, till around 2020 for supplying EV.
A secondary battery requires a specific energy of 200 Wh/kg, power density of 2500 W/kg, and cycle life span of 1000 and 85 %, till around 2020 for supplying HEV. EV requires high energy density and HEV requires high power density. In particular, both of EV and HEV require high safety.

It is possible to manufacture a battery having sufficiently high power density (3200W/kg) by using only LVP-Carbon complex as a positive-electrode active material, as can be seen from Comparative Example 3, but the specific energy and cycle characteristic are not sufficient. In the present invention, it is possible to provide a battery that satisfies the cycle characteristics required for EV or HEV while maintaining high power density by mixing a lithium-nickel complex oxide, and has capacity largely improved in comparison to the related art.
Although it had been considered that the capacity and power would be the middle value of two active materials when simply combining the high-power battery (Comparative Example 3) containing only LVP-Carbon complex as a positive-electrode material with high-capacity batteries (Comparative Examples 1 and 2) containing LiNi_{0.8}Co_{0.1}Mn_{0.1}O₂ or the like as a positive-electrode material, but it is found as described in the above that the cycle characteristic can be further improved by an synergetic effect of combining the Li₃V₂(PO₄)₃ and the lithium-nickel complex oxide.

That is, although the lithium-vanadium-phosphate such as Li₃V₂(PO₄)₃ and lithium-nickel complex oxides such as LiNi_{0.8}Co_{0.1}Mn_{0.1}O₂ are both positive-electrode active material having a low cycle characteristic, a large effect of improving the cycle characteristic due to an action based on physical/chemical characteristics of the lithium-vanadium-phosphate and lithium-nickel complex oxides can be obtained by combining them, and an increase in capacity that is desired for supplying EV or HEV can be accomplished.

In accordance with the above embodiments and examples, an electric storage device may include a positive electrode having a positive-electrode mixture layer including a positive-electrode active material. The positive-electrode active material may include a lithium-vanadium-phosphate and a lithium-nickel complex oxide. A mass ratio of the lithium-vanadium-phosphate to the lithium-nickel complex oxide may be in a range from 8:82 to 70:20.
That is, the positive-electrode active material may include the lithium-vanadium-phosphate from 8 % to 70 % by mass and the lithium-nickel complex oxide from 20 % to 82 % by mass. A coating concentration of the positive-electrode mixture layer may be from 4 mg/cm² to 20 mg/cm². The lithium-nickel complex oxide may include a nickel element from 0.3 mol to 0.8 mol with respect to a lithium element of 1 mol.

According to the above structure, it is possible to achieve an electric storage device that has high power, high safety, high capacity, and excellent charging/discharging characteristic, by mixing a predetermined amount of lithium-nickel complex oxide to the lithium-vanadium-phosphate such as Li₃V₂(PO₄)₃ as a positive-electrode active material and by using a positive electrode having a positive-electrode mixture layer having the above structure.
Such an advantage seems to be obtained by a synergetic advantage of an effect of the high power and high safety by the lithium-vanadium-phosphate, an effect of increasing the capacity by adding the lithium-nickel complex oxide, and an effect of preventing deterioration by adding the lithium-nickel complex oxide to the electric storage device using the lithium-vanadium-phosphate and the lithium-vanadium-phosphate.

That is, the effect of preventing deterioration of the electric storage device would be achieved as follows. A reduction of the charging/discharging cycle characteristic of the electric storage device using lithium-vanadium-phosphate in high temperature seems to be cause by an elution of vanadium due to long-time preserve. It is considered that a main factor causing the elution of vanadium from lithium-vanadium-phosphate is an influence of hydrogen ion (proton) from hydrogen fluoride produced by decomposition of the electrolyte.
Since the proton adsorptive property of the lithium-nickel complex oxide is high, it is considered that the hydrogen ion is effectively adsorbed. Therefore, it is considered that, by mixing the lithium-nickel complex oxide with the lithium-vanadium-phosphate as the positive-electrode active material, the produced hydrogen ion is adsorbed and the vanadium is prevented from being eluted from the lithium-vanadium-phosphate.
Accordingly, by adding the lithium-nickel complex oxide, it is possible to prevent vanadium from being eluted from the lithium-vanadium-phosphate, and the charging/discharging cycle characteristic of the electric storage device is improved by effectively trapping hydrogen ion in the electrolyte in the positive electrode. That is, it is possible to greatly improve the cycle characteristic in a way suitable for the lithium-vanadium-phosphate, in addition to improving the capacity, by adding the lithium-nickel complex oxide.

Further, in accordance with the above embodiments and examples, the lithium-nickel complex oxide may include a nickel element from 0.5 mol to 0.8 mol with respect to a lithium element of 1 mol.

In addition, in accordance with the above embodiments and examples, the lithium-vanadium-phosphate is a material expressed by a formula of LiₓV_{2-y}M_{y}(PO₄)_{z}, where M is one or more selected from a group of Fe, Co, Mn, Cu, Zn, Al, Sn, B, Ga, Cr, V, Ti, Mg, Ca, Sr and Zr, and where 1 ≤ x ≤ 3; 0 ≤ y ≤ 2; and 2 ≤ z ≤ 3.

Moreover, in accordance with the above embodiments and examples, the lithium-nickel complex oxide may include a metal element which has an atomic number of 11 or more and which is different from the nickel element. In addition, in accordance with the above embodiments and examples, the metal element having the atomic number of 11 or more may be an element selected from Co, Mn, Al, and Mg.

Moreover, in accordance with the above embodiments and examples, the lithium-vanadium-phosphate may be formed in particles, and a surface of each of the particles of the lithium-vanadium-phosphate may be coated with conductive carbon.

Furthermore, in accordance with the above embodiments and examples, an average diameter of primary particles of the lithium-vanadium-phosphate may be 2.6 µm or less. Surfaces of the particles of the lithium-vanadium-phosphate may be coated with the conductive carbon of 0.5 % to 2.4 % by mass with respect to a total mass of the lithium-vanadium-phosphate.

In addition, in accordance with the above embodiments and examples, the lithium-vanadium-phosphate which is coated with the conductive carbon is manufactured by the steps of a first step of mixing a lithium source, a vanadium compound, a phosphorus source, and a conductive carbon material source that generates a carbon by a thermal decomposition thereof, in a water solution to prepare an ingredient mixture; a second step of heating the ingredient mixture and performing a precipitation reaction to obtain a reaction solution including a precipitation product; a third step of wet-crushing the reaction solution including the precipitation product by a media mill to obtain a slurry including a crushed object; a fourth step of spray-drying the slurry including the crushed object to obtain a reaction precursor; and a fifth step of burning the reaction precursor under an inert gas atmosphere or a reductive atmosphere in a temperature from 600 °C to 1300 °C.

The present invention is not limited to the configurations of the embodiments and examples and may be modified in various ways without departing from the scope of the present invention.

### LIST OF REFERENCE SIGNS

- 20: secondary battery
- 21: positive electrode
- 21a: positive-electrode mixture layer
- 21b: positive-electrode collector
- 22: negative electrode
- 22a: negative-electrode mixture layer
- 22b: negative-electrode collector
- 23: separator
- 30: secondary battery
- 31: positive electrode
- 31a: positive-electrode mixture layer
- 31b: positive-electrode collector
- 32: negative electrode
- 32a: negative-electrode mixture layer
- 32b: negative-electrode collector
- 33: separator
- 34: electrode unit
- 36: lead
- 37: lead

## Claims

1. A positive electrode having a positive-electrode mixture layer, including a positive-electrode active material,
wherein the positive-electrode active material includes
a lithium-vanadium-phosphate and a lithium-nickel complex oxide,
wherein the mass ratio of the lithium-vanadium-phosphate to the lithium-nickel complex oxide is in a range from 8:82 to 70:20;
wherein the coating concentration of the positive-electrode mixture layer is from 4 mg/cm² to 20 mg/cm², and
wherein the lithium-nickel complex oxide includes a nickel element from 0.3 mol to 0.8 mol with respect to a lithium element of 1 mol.

2. The positive electrode according to claim 1,
wherein the lithium-nickel complex oxide includes a nickel element from 0.5 mol to 0.8 mol with respect to a lithium element of 1 mol.

3. The positive electrode according to claim 1 or 2,
wherein the lithium-vanadium-phosphate is a material expressed by the formula: LiₓV_{2-y}M_{y}(PO₄)_{z},
wherein M is one or more selected from a group of Fe, Co, Mn, Cu, Zn, Al, Sn, B, Ga, Cr, V, Ti, Mg, Ca, Sr and Zr, and
wherein
1 ≤ x ≤ 3;
0 ≤ y ≤ 2; and
2 ≤ z ≤ 3.

4. The positive electrode according to any one of claims 1 to 3,
wherein the lithium-vanadium-phosphate is Li₃V₂(PO₄)_{3 .}

5. The positive electrode according to any one of claims 1 to 4,
wherein the lithium-nickel complex oxide includes a metal element which has an atomic number of 11 or more and which is different from the nickel element.

6. The positive electrode according to claim 5,
wherein the metal element having the atomic number of 11 or more is an element selected from Co, Mn, Al, and Mg.

7. The positive electrode according to any one of claims 1 to 6,
wherein the lithium-vanadium-phosphate is formed in particles, and a surface of each of the particles of the lithium-vanadium-phosphate is coated with conductive carbon.

8. The positive electrode according to claim 7,
wherein the average diameter of primary particles of the lithium-vanadium-phosphate is 2.6 µm or less, and
wherein surfaces of the particles of the lithium-vanadium-phosphate are coated with the conductive carbon of 0.5 % to 2.4 % by mass with respect to a total mass of the lithium-vanadium-phosphate.

9. The positive electrode according to claim 7 or 8,
wherein the lithium-vanadium-phosphate which is coated with the conductive carbon is manufactured by the steps of:
obtaining a reaction precursor by spray-drying a reaction solution prepared by reacting a lithium source, a vanadium compound, a phosphorus source,
and a conductive carbon material source that generates a carbon by the thermal decomposition thereof, in a water solution; and
burning the reaction precursor under an inert gas atmosphere or a reductive atmosphere.

10. The positive electrode according to claim 7 or 8,
wherein the lithium-vanadium-phosphate which is coated with the conductive carbon is manufactured by the steps of:
a first step of mixing a lithium source, a vanadium compound, a phosphorus source, and a conductive carbon material source that generates a carbon by the thermal decomposition thereof, in a water solution to prepare an ingredient mixture;
a second step of heating the ingredient mixture and performing a precipitation reaction to obtain a reaction solution including a precipitation product;
a third step of wet-crushing the reaction solution including the precipitation product by a media mill to obtain a slurry including a crushed object;
a fourth step of spray-drying the slurry including the crushed object to obtain a reaction precursor; and
a fifth step of burning the reaction precursor under an inert gas atmosphere or a reductive atmosphere in a temperature from 600 °C to 1300 °C.

11. An electric storage device
comprising a positive electrode according to any of claims 1 to 10.

12. The electric storage device according to claim 11,
further comprising a negative electrode, a separator, and an electrolytic solution, sealed in an exterior container
